(19) Europäisches Patentamt
European Patent Office
Office européen des brevets

(11) **EP 3 152 550 B1**

(12) **EUROPÄISCHE PATENTSCHRIFT**

(45) Veröffentlichungstag und Bekanntmachung des Hinweises auf die Patenterteilung:
**29.08.2018   Patentblatt 2018/35**

(21) Anmeldenummer: **15722160.7**

(22) Anmeldetag: **07.05.2015**

(51) Int Cl.:
*G01N 21/88* (2006.01)      *G01N 21/90* (2006.01)

(86) Internationale Anmeldenummer:
**PCT/EP2015/060061**

(87) Internationale Veröffentlichungsnummer:
**WO 2015/185318 (10.12.2015 Gazette 2015/49)**

(54) **INSPEKTIONSVORRICHTUNG FÜR BEHÄLTERVERSCHLÜSSE**

INSPECTION DEVICE FOR CONTAINER CLOSURES

DISPOSITIF D'INSPECTION POUR LES FERMETURES DE RÉCIPIENTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.06.2014   DE 102014107915**

(43) Veröffentlichungstag der Anmeldung:
**12.04.2017   Patentblatt 2017/15**

(73) Patentinhaber: **KHS GmbH**
**44143 Dortmund (DE)**

(72) Erfinder:
• **BUCHWALD, Carsten**
  **53498 Bad Breisig (DE)**
• **HERRMANN, Jürgen-Peter**
  **57520 Rosenheim (DE)**
• **HERRMANN, Marius Michael**
  **57520 Rosenheim (DE)**
• **SCHORN, Wolfgang**
  **53506 Hönningen (DE)**
• **ZHANG, Xiang**
  **58300 Wetter (DE)**

(56) Entgegenhaltungen:
EP-A2- 1 270 433        WO-A2-03/002992
US-A- 4 914 289         US-A- 5 563 736
US-A- 5 592 286         US-A- 6 122 048
US-A1- 2004 150 815

**Beschreibung**

Die Erfindung betrifft eine Vorrichtung zur Inspektion von Verschlüssen von Behältern, insb. von Schraubverschlüssen für Flaschen, Gläsern, Tuben oder dergleichen Behälter, in einer Inspektionsvorrichtung und -anlage gemäß dem Oberbegriff des Anspruchs 1.

Bei Anlagen in der Getränkeindustrie ist es üblich und bekannt, die Verschlüsse von Flaschen oder dergleichen Behälter hinsichtlich verschiedener unterschiedlicher Kriterien zu überprüfen. Dies sind beispielsweise die Verschlussanwesenheit, Verschlussstellungen, Anwesenheit und Qualität von Sicherungselementen (bspw. Manipulationssicherungen), Dekoranwesenheit und -ausrichtung, Beschädigungen, Risse oder ähnliches.

Die genannten Flaschen oder dergleichen Behälter bestehen beispielsweise aus Glas oder Kunststoff, insbesondere PET, können jedoch auch aus anderen Materialien bestehen und sind mit Verschlüssen versehen, womit insbesondere Schraubverschlüsse gemeint sind. Diese bestehen beispielsweise aus Metall, Kunststoff oder auch anderen Materialien und bestehen insb. aus einer mehr oder weniger flachen Deckelfläche (Verschlusskopffläche), die dazu dient, die Mündungsöffnung zu überspannen und hierzu im Wesentlichen vertikal ausgerichtetes, zylinder- oder ringartiges Außenwandmaterial (Verschlussseitenfläche), sowie in der Regel ein oder mehrere Manipulationssicherungen.

Diese Manipulationssicherungen können einteilig mit dem Verschlusselement ausgebildet sein (Ring, Rastzähne, etc.) oder ein separates Kopfetikett, eine Hülse oder sonst wie ausgebildet sein, als ein mit dem Verschlusselement zusammenwirkendes zusätzliches Ausstattungselement.

Bei der Inspektion eines Verschlusses, insb. eines Schraubverschlusses aus einem Kunststoff, wie PE, PP etc., soll in einem oder mehreren Arbeitsschritten der gesamte Mündungsbereich und ein vertikaler Abschnitt des Behälterhalses, sowie das gesamte Verschlussmaterial auf oben genannte Kriterien geprüft werden. Die Daten dieser Inspektion dienen dann dazu, um die fehlerhafte Behälter bzw. Behälterverschlüsse auszusortieren und gegebenenfalls den Prozess zu optimieren.

Unter Verschlusssystem soll nachstehend immer die vollständige, gewünschte Endanordnung aller Elemente verstanden werden, also neben dem eigentlichen Deckel, als Verschlusselement, auch Dekor, Manipulationssicherungselement, sowie angrenzende und ggf. funktional in Wirkverbindung zum Verschlusselement stehende Anlageflächen am Behälterhals, ggf. ein Neckring, etc.

In der Regel soll die Inspektion weiterhin ohne räumliche Bewegungsbeeinträchtigung der Flaschen in einer 360°-Betrachtung realisiert werden. Insb. muss für hohe Prozessleistungen und Transportgeschwindigkeiten ein kontinuierlicher Inspektionsprozess sichergestellt sein.

Aus der Druckschrift US 6,122,048 A ist ein Video-Inspektionssystem bekannt, bei dem Licht von einer Lichtquelle durch eine Feldlinse geleitet wird, die das einfallende Licht zuerst in Richtung eines zu prüfenden Objekts und dann, nachdem es von dem Objekt reflektiert worden ist, das reflektierte Licht in Richtung der Blende einer Abbildungsobjektiv / Kamera-Anordnung umlenkt, was zu einer Vergrößerung ausgewählter Bereiche des Objekts führt.

Die Druckschrift US 2004/0150815 A1 lehrt ein Verfahren zur gleichzeitigen Erfassung von überlagerten, farbigen Dunkelfeld- und Hellfeldbildern mit einer Kamera, gefolgt von einer Entkopplung der Bilder in monochrome Komponenten zur weiteren Analyse von Oberflächendefekten.

In der EP 1 270 433 A2 wird eine Vorrichtung zur Inspektion von Verschlüssen von Flaschen oder dergleichen Behälter beschrieben, welche eine senkrecht zur Behälterachse angeordnete Vorrichtung umfasst, welche mittels einer plan-konvexen Linse, einer Beleuchtungsvorrichtung, einer Kamera und einem System zur elektronischen Bildverarbeitung eine Inspektion der Schraubverschlüsse durchführt.

Die LED-Beleuchtungsvorrichtung bestrahlt den Verschluss aus einer seitlich angeordneten Position. Die senkrecht oberhalb des Verschlusses angeordnete optische Linse überragt im Durchmesser den Verschluss und bündelt so die Lichtstrahlen des Verschlussseiten- und Verschlussdeckelmaterials in einem Punkt senkrecht oberhalb der optischen Linse, in dem die Kamera das Bild aufnimmt.

Vorgeschlagen wird hierfür eine geeignete optische Linse, die als Plankonvexlinse oder Meniskuslinse ausgeformt ist. Dadurch lässt sich der Strahlengang so ablenken, dass ein Bild des Verschlussdeckel-, sowie Verschlussseitenmaterials mit einer Kamera aufgenommen werden kann, die in Achsrichtung also vertikal oberhalb des Behälters bzw. des Verschlusselementes angeordnet ist.

Für eine derartige Inspektionsaufgabe sind zwei Durchtrittsseiten der optischen Linse relevant, durch die die Lichtstrahlen zum Schnittpunkt bzw. zur Kamera gelenkt werden. Eine Plankonvexlinse ist dadurch gekennzeichnet, dass eine Durchtrittsseite der Linse plan, also eben, und die andere Durchtrittsseite konvex, also durchgängig nach außen gewölbt ist. Eine Meniskuslinse ist dadurch gekennzeichnet, dass eine Durchtrittsseite der Linse durchgängig konkav, also nach innen gewölbt und die andere Durchtrittsseite durchgängig konvex ist.

Mit einer digitalen Bildverarbeitungsvorrichtung wird das aufgenommene Bild bzw. die Daten der Kamera erfasst. bedarfsweise umgewandelt und anschließend ausgewertet. Diese ausgewerteten Daten können dann als Steuersignal für die Behandlungs- und Transportstrecke der Behälter dienen, insb. zur ggf. erforderlichen Ausschleusung von Fehlbehältern/-verschlüssen.

Problematisch bei den bekannten Lösungen ist, dass die Lichtstrahlen nach dem Durchgang durch die konvex ausgebildete Linsenoberfläche nicht die gleiche Schnittweite besitzen und somit nicht in einem gemeinsamen Punkt zusammentreffen, wodurch das Bild unscharf wird.

Dieser Effekt nimmt mit dem Abstand, bei vertikaler Ausrichtung mit der Tiefe, der betrachteten Verschlussseitenfläche des Verschlusssystems zu und führt zu Verzerrungen, die somit vor allem wichtige Elemente des Verschlusssystems, wie den tiefen Gewindebereich, den Sicherungsring an der Unterkante der Verschlussseitenfläche, den Neckring oder Abstands- und Übergangsbereiche vorgenannter Elemente betreffen, die nicht mehr in gewünschter Qualität erfasst und ausgewertet werden können.

Ein scharfes Bild ist allerdings in der Inspektionstechnik von herausragender Bedeutung. Es müssen teils schwer ersichtliche und ggf. sehr kleinräumige Fehler detektiert werden, um eine optimale Verschlussqualität jedes einzelnen Behälters zu gewährleisten.

Ausgehend vom Stand der Technik liegt der Erfindung die Aufgabe zugrunde, eine Vorrichtung bereitzustellen, die eine verbesserte Erfassungs- und Aufwertungsmöglichkeit für Verschlusssysteme bereitstellt.

Erfindungsgemäß wird die Aufgabe durch eine Vorrichtung zur Inspektion von Verschlusssystemen von Behältern mit den Merkmalen des Anspruchs 1 gelöst, wobei die optische Linse als rotationssymmetrische, plan-asphärische Linse ausgebildet ist.

Durch diese Ausführungsform können Abbildungsfehler, die durch eine sphärische Linse in Form einer Plankonvexlinse oder Meniskuslinse entstehen, reduziert oder sogar behoben werden. Vorteile dieser Lösung sind geringe Kosten, einfache Anwendbarkeit und hohe Zuverlässigkeit.

Rotationssymmetrische, plan-asphärische Linsen sind grundsätzlich bekannt und dadurch gekennzeichnet, dass eine Durchtrittsseite der Linse plan ist und die andere Durchtrittsseite der Linse in der Linsenachse ihren absoluten Höhepunkt besitzt, wobei der Oberflächenverlauf der Oberseite durch einen asphärischen Oberflächenverlauf beschrieben werden kann.

Der asphärische Oberflächenverlauf wird durch einen Kegelschnitt beschrieben, der in einen durch eine Potenzreihe höherer Ordnung definierten Verlauf übergeht.

Zur Veranschaulichung folgend die Berechnungsgleichung zur Erstellung von asphärischen Oberflächen nach DIN ISO 10110-12:

$$z(r) = \underbrace{\frac{r^2}{R\left(1 + \sqrt{1 - (1+k)\left(\frac{r}{R}\right)^2}\right)}}_{\text{I}} + \underbrace{A_4 r^4 + A_6 r^6 + \ldots}_{\text{II}}$$

mit:

- I = Gleichungsanteil des Kegelschnitts
- II = Gleichungsanteil als Potenzreihe für Deformationen höherer Ordnung
- $z$ = Pfeilhöhe
- $r$ = Abstand senkrecht zur Achse (Einfaltshöhe)
- $R$ = Scheitelradius
- $k$ = konische Konstante
- $A_4$, $A_6$, ... = asphärische Parameter

Erfindungsgemäß umfasst der asphärische Oberflächenverlauf einen in der Linsenachse konvexen (Gleichungsanteil I), sowie mindestens einen konkaven oder planen Oberflächenverlauf (Gleichungsanteil II).

Durch diese Ausbildung werden Lichtstrahlen, die vom unteren Rand des betrachteten Materials reflektiert werden, durch den asphärischen Teil der Linse gebrochen, welcher es durch seinen speziell angepassten Oberflächenverlauf ermöglicht, sphärische Aberrationen zu verhindern und tiefe Beobachtungsbereiche der Verschlussseitenfläche ebenfalls scharf darzustellen.

In günstiger Ausgestaltung ist der Oberflächenverlauf so gestaltet, dass sich alle Lichtstrahlen im gleichen Schnittpunkt bündeln und so eine optimale Bildschärfe erreicht wird, diese insb. auch für Strahlen, die von den unteren, d.h. von der Linsenunterseite entferntesten seitlichen Oberflächenbereichen reflektiert wurden.

Dadurch, dass die Linse rotationssymmetrisch ist, lässt sie sich im Querschnitt in horizontale Abschnitte unterteilen, welche sich durch ihre Oberflächenverläufe unterscheiden. Ein Beispiel findet sich in der später folgenden Beschreibung einer speziellen Ausführungsform der rotationssymmetrischen, plan-asphärischen Linse.

Mit der erfindungsmäßen LED-Beleuchtungsvorrichtung können Lichtspektren verschiedener Wellenlängen emittiert werden.
Dabei ist das zu wählende ideale Lichtspektrum von den Behälter- und Verschlusseigenschaften oder dem Brechungsverhalten der asphärischen Linse abhängig.

In günstiger Ausführung kann die Beleuchtung so speziell auf verschiedene Materialen und Farben, beispielsweise eines sich vom Verschlussmaterial unterscheidenden Sicherungsringes eingestellt werden, um eine optimale Bildqualität zu erreichen. Hierzu hat die Beleuchtungseinheit bspw. Bereiche (insb. konzentrische Bereiche), die Licht mit unterschiedlichen Wellenlängen und/oder Intensitäten emittieren können. Somit kann bspw. ein Grundkörper eines sehr dunklen Schraubverschlusses zur Detektion von Beschädigungen oder Rissen in der Verschlussseitenwand anders angestrahlt werden (intensiver), als der Neckring und/oder der Übergangsbereich zum Neckring zur Erfassung von Lage und Schaden in diesem Bereich. Oder ein Teilbereich des Verschlusselements weist einen sehr hellen, stark reflektierenden Dekorbereich auf, welcher ggf, mit einem speziellen monochromen Licht bestrahlt werden muss und tieferliegende Bereiche der Verschlussseitenfläche und/oder eines tiefen Sicherungsrings müssen mit einem Licht mit hierzu unterschiedlicher Wellenlänge angestrahlt werden.

Es kann weiterhin von Vorteil für die Datenauswertung, dass die Beleuchtungseinheit das Verschlusssystem derart anstrahlt, dass in den konvexen Linsenabschnitt vorrangig Licht(-strahlen) mit einer ersten Wellenlänge fallen und in den asphärischen Linsenabschnitt Licht(-strahlen) mit einer zweiten Wellenlänge fallen.

Die Figur 1 zeigt die Inspektionsvorrichtung in einer Seitenansicht und

Figur 2 zeigt den Aufbau einer asphärischen Linse in einer Schnittdarstellung.

Figur 3 zeigt den vergleichenden Verlauf der Strahlengänge durch eine sphärische und eine asphärische Linse.

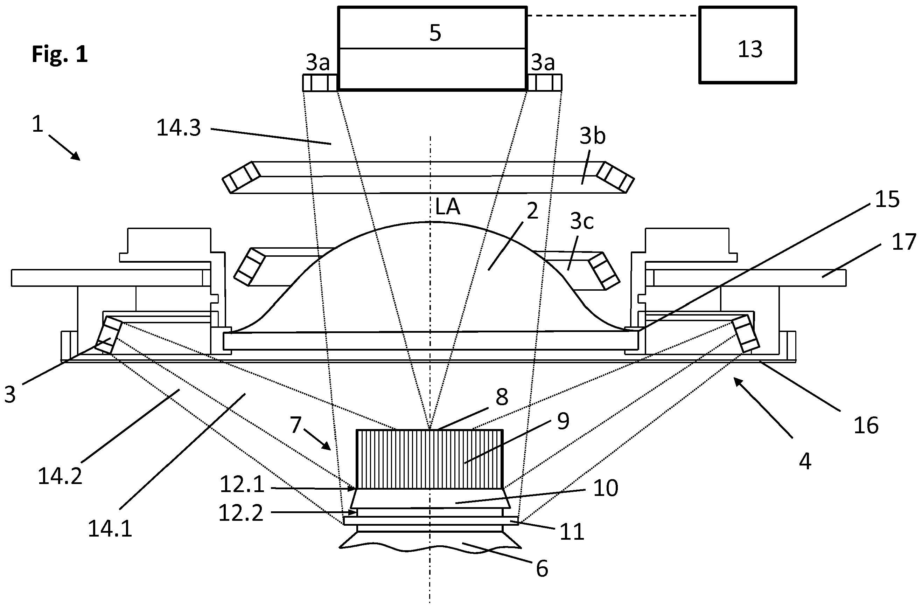

Die Inspektionsvorrichtung 1 umfasst eine Linse 2, die vorliegend als asphärische Linse ausgebildet ist, sowie eine konzentrisch um die Linse 2 bzw. zur Linsenachse A angeordnet LED-Beleuchtung 3 und eine Trag- und Haltevorrichtung 4 insb. für die Linse 2 und die LED-Beleuchtung 3. In axialer Ausrichtung oberhalb der Linse 2 ist eine Kamera 5 als Bilderfassungseinheit angeordnet, die wiederum mit einer Datenauswerte und -Steuereinheit 13 in Verbindung steht. In der Figur 1 ist weiterhin der Mündungs- und Verschlussbereich einer Flasche 6 dargestellt, im Moment der Inspektion des Verschlusses 7. Der Verschluss 7 der Flasche 6 umfasst eine Verschlusskopffläche 8, eine Verschlussseitenfläche 9 (mit Gewindeabschnitt) mit einer üblichen gezahnten oder gerauten Oberfläche und einem sich hieran vertikal unterhalb anschließenden Sicherungsring 10 als Manipulationssicherung mit nicht erkennbaren nach innen gerichteten Rastzähnchen. Der Verschluss 7 ist vorliegend einteilig mit dem Sicherungsring 10 als unteres Ende ausgebildet, wobei die Oberflächen unterschiedlich strukturiert sind, nämlich im Bereich der Verschlussseitenfläche 9 mit länglichen, vertikalen Rillen und im Bereich des Sicherungsringes 10 glatt und leicht schräg nach außen gestellt ist.

Hieran schließt sich der Neckring 11 unterhalb des Sicherungsrings 10 an. Direkt unterhalb des Neckrings 11 ist der Hals des Behälters 6 erkennbar, der dann in den nicht weiter ausgeführten Schulterbereich des Behälters 6 übergeht.

Die Trag- und Haltevorrichtung 4 umfasst eine Klemmnut 15 für zur Erfassung und Positionierung des Randes der Linse 2, eine untere Abdeckscheibe 16 und einen Befestigungsflansch 17 für die Verbindung und Fixierung der gesamten Trag- und Haltevorrichtung 4 an angrenzenden (nicht dargestellten) Vorrichtungselementen. Idealerweise ist die Beleuchtungseinheit 3 oberhalb der unteren Abdeckscheibe 16 angeordnet, wobei die Strahlen der Beleuchtungseinheit 3 vor dem Auftreffen auf den Verschluss 7 (in der Regel nur auf die Verschlussseitenfläche 7 und tiefer liegenden Elemente) idealerweise an der Linse 2 vorbei verlaufen und nicht vorher in die Linsenoberfläche ein- und ausgeleitet werden.

Es ergeben sich somit zwei Übergangsbereiches 12.1 und 12.2 im Verschlusssystem. Der erste Übergangsbereich 12.1 ist eine bei PE-Material etwas heller erscheinenden Ring zwischen der Verschlussseitenfläche 9 und dem Sicherungsring 10 und der zweite Übergangsbereich ist zwischen der Unterkante des Sicherungsring 10 und der Oberkanten des Neckrings 11 als ein Ringspalt ausgebildet, der bei einer korrekten Endlage des Verschlusselementes 7 eine in Umfangsrichtung immer identische Höhe hat.

Die dargestellte LED-Beleuchtungsvorrichtung 3, emittiert Lichtstrahlen 14.1, 14.2 in verschiedenen Wellenlängen auf den Verschluss 7 der Flasche, welche optimal an die gegebenen Anforderungen angepasst sind.

Die an der Verschlussseitenfläche 9 und dem Übergangsbereich 12.1 reflektierten ersten Lichtstrahlen 14.1 sowie die an dem Sicherungsring 10, ggf. dem Neckring 11 und dem Übergangsbereich 12.2 reflektierten Lichtstrahlen 12.2 werden nun von der senkrecht oberhalb angeordneten rotationssymmetrischen, plan-asphärischen Linse 2 gebündelt und in die Kamera 5 geleitet. Eine Verbesserung kann dadurch erreicht werden, dass der Übergangsbereich 12.1 als ein besonders kritischer, weil sicherheitsrelevanter Bereich gesondert angestrahlt und inspiziert wird, indem Lichte einer eigenen Wellenlänge und/oder Intensität gewählt wird.

Durch die spezielle Form der Linse 2, welche durch einen konvexen, planen und konkaven Verlauf gekennzeichnet ist, treffen die Lichtstrahlen 14.1 und 14.2 in einem gemeinsamen Schnittpunkt aufeinander, sodass die Kamera 5 ein besonders scharfes, unverzerrtes Bild bzw. Bilddaten empfangen kann.

Als vorteilhafte Varianten ist in Figur 1 eine weitere Beleuchtungseinheit 3a dargestellt. Die Lichtstrahlen 14.3 der Beleuchtungseinheit 3a werden durch die Linse 2 auf Verschlusskopffläche 8 geleitet und werden von dort in die Kamera 5 reflektiert. Die Beleuchtungseinheit 3a ist hierfür oberhalb der Beleuchtungseinheit 3 und idealerweise auf der Höhe der Kamera 5 angeordnet. Die Beleuchtungseinheiten 3b und 3c stellen optionaler Anordnungshöhen/-orte für die weitere Beleuchtungseinheit 3a dar und sind immer idealerweise konzentrisch als LED-Ring oder mehrere LED-Leichtfelder um die Achse LA angeordnet.

Das aufgenommene Bild wird von der elektronischen Bildverarbeitungsvorrichtung 13 bspw. in Polarkoordinaten umgewandelt und anschließend ausgewertet.

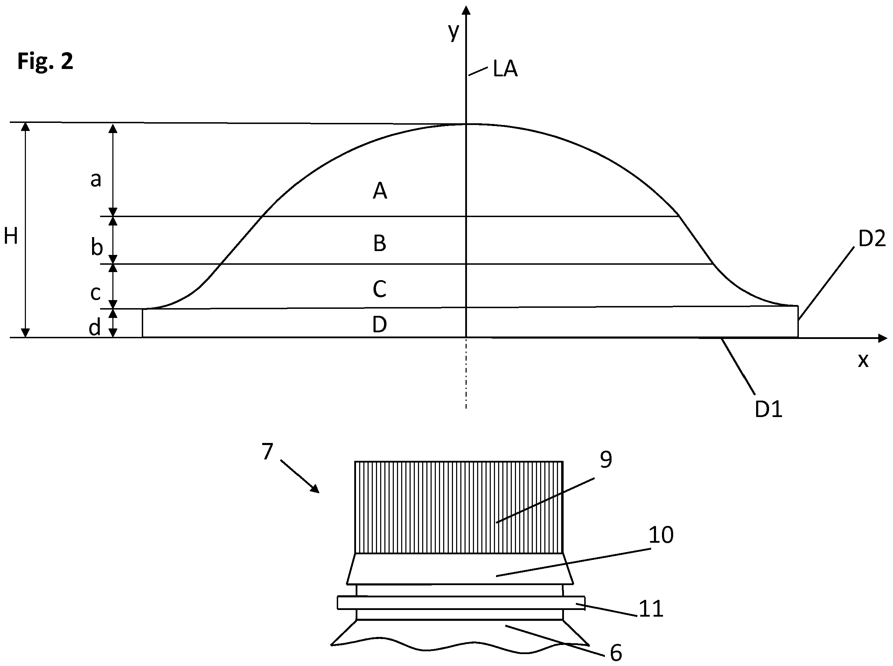

Eine spezielle Ausführungsform der erfindungsmäßen rotationssymmetrischen, plan-asphärischen Linse ist in Figur 2 abgebildet und nachfolgend näher beschrieben.

Die asphärische Linse 2 lässt sich hier in drei oder vier Bereiche A, B, C und D unterteilen. Dabei korreliert der Linsenbereich A mit dem vertikalen Höhenabschnitt a, und weist einen konvexen Oberflächenverlauf auf, welcher in der Berechnungsfunktion durch den Gleichungsteil I beschrieben wird. Der Linsenbereich B korreliert mit der Höhe b, unterhalb der vertikalen Höhe a, mit einem planen Oberflächenverlauf. Hieran schließt sich der Linsenbereich C mit einem konkaven Oberflächenverlauf an, der im vertikalen Höhenbereich c liegt. Die Linsenbereiche B und C in den Höhenlagen b und c bilden gemeinsam den asphärischen Oberflächenbereich der Linse 2 aus und sind durch den Gleichungsteil II der Berechnungsformel beschreibbar.

Der unterste Linsenbereich D ist durch die vertikale Höhe d zu beschreiben und bildet den Flansch oder die Fassung der Linse 2, um diese geeignet positionieren und befestigen zu können. Die Unterseite D1 des Linsenbereiches D bildet die Unterseite der Linse 2. Die vertikale, äußere Seitenfläche D2 Linsenbereiches D trägt in der Regel zur Strahlenführung nicht bei, da durch die Seitenfläche D2 im Normalfall weder Strahlen ein- noch ausgeleitet werden.

Je nach Inspektionsaufgabe kann einer der Linsenbereiche B oder C entfallen. Weiterhin kann bei einer konstruktiv unterschiedlichen Lösung der unterste Bereich B oder C so groß ausgebildet sein, dass ein geeigneter Träger oder Fassung die Linse lagesicher fixieren kann, so dass der Linsenbereich D vollstandig entfällt und die Unterseite D1 dann die Unterseite des jeweils tiefsten Linsenbereiches B oder C ist.

Die Summe der Höhen a-d ergeben gemeinsam die Gesamthöhe H der Linse 2. Bei einer insgesamt unterschiedlichen Gesamtorientierung des Inspektionssystem 1 als bspw. liegende Anordnung, bei bspw. horizontal oder kopfüber gehaltenen, transportierten Behältern, sind die genannten Orientierungen und Lagen entsprechend analog zu verstehen.

Somit wird erreicht, dass mit einer einzigen Linse oberhalb des Laufweges des Behälters und mit einer einzigen Bilderfassungsvorrichtung, insb, einer Kamera, ein Verschlusssystem für eine Schraubverschlusskappe bis hinunter und einschließlich zum Neckring mit allen dort angeordneten Elementen, Konturen und Geometrien erfasst und mit einer hohen Qualität und Sicherheit ausgewertet werden kann. Die in der Inspektionstechnik bekannte und übliche geringfügig, zeitversetzten Ausleuchtung im Millisekundenbereich für unterschiedliche Inspektionsaufgaben und mit ggf. Licht mit unterschiedlicher Wellenlänge und/oder Intensität kann ergänzend vorgenommen werden, soweit sinnvoll. Derartige gepulste Ausleuchtung ist aber bei der Mehrzahl der Inspektionsfälle wegen der vorteilhaften Anordnung nicht mehr erforderlich.

Dabei stellt der Einsatz eines LED-Beleuchtungssystem mit der gezielten, bereichsweisen Ausleuchtung des Verschlusssystems, und zwar angepasst an die jeweiligen Oberflächen und deren optischen Effekte, eine besonders vorteilhafte Variante und Weiterentwicklung dar.

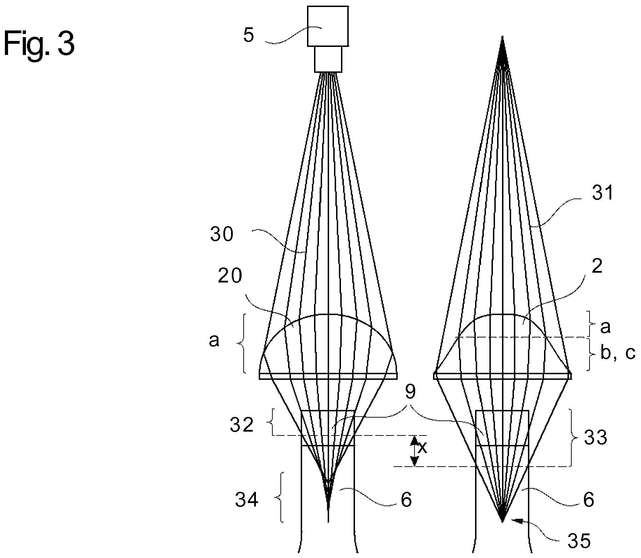

In der Figur 3 ist der Strahlenverlauf 30 durch die sphärische Linse 20 im Vergleich des Strahlenverlaufes 31 durch die asphärische Linse 2 gegenüber gestellt. Insb. ist zu erkennen, dass die Strahlbrechung im asphärischen Bereich b, c der Linse 2 ein um die Strecke x vergrößertes Inspektionsbild 33 gegenüber dem kleineren Inspektionsbild 32 der sphärischen Linse 20 ermöglicht. Mit der asphärischen Linse 2 ist somit ein in Achsrichtung des Behälters 6 tieferer Blick und damit in Achsrichtung größeres Inspektionsbild 33 möglich.

Weiterhin ist erkennbar, wie der Brennpunkt 35 der asphärischen Linse 2 viel schärfer ausgeformt ist, als Maß für die Bildqualität und Bildschärfe. Im Vergleich hierzu ist der Brennpunkt 34 der sphärischen Linse 20 deutlich gestreut und damit liegt hier ein diffuses Bild vor.

**Patentansprüche**

1. Inspektionsvorrichtung (1) zur Inspektion von Verschlüssen (7) von Flaschen (6) oder dergleichen Behälter, insbesondere Schraubverschlüssen, umfassend

   eine optische Linse (2), eine Beleuchtungsvorrichtung (3), eine Kamera (5) und ein System zur elektronischen Bildverarbeitung (13), wobei

   - die Linse (2) vertikal oberhalb des Verschlusses (7) angebracht ist und
   - die Strahlenbündelung in Richtung der vertikal oberhalb der optischen Linse (2) angebrachten Kamera (5) erfolgt und
   - die Kamera (5) an das System zur elektronischen Bildverarbeitung (13) angeschlossen ist, wobei

   die optische Linse (2) als rotationssymmetrische Linse ausgebildet ist und mindestens zwei Linsenbereich (A, B, C) aufweist, wovon ein Linsenbereich A eine konvexe Oberfläche und der mindestens eine weitere Linsenbereich (B, C) eine plan-asphärische Oberfläche aufweist, wobei
   die Beleuchtungsvorrichtung (3) eine ringartige oder aus mehreren Feldern bestehende LED-Beleuchtungsvorrichtung ist,
   **dadurch gekennzeichnet, dass**
   die LED-Beleuchtungsvorrichtung mindestens zwei oder mehr Bereiche aufweist, wobei jeder der Bereiche oder mehrere Bereiche gemeinsam, Lichtspektren verschiedener und/oder voneinander unterschiedliche Wellenlängen emittiert können, und dass
   die Bereiche der LED-Beleuchtungsvorrichtung derart angeordnet sind und mit der Anordnung der Linse (2) und deren Linsenbereiche (A, B, C) zusammenwirken, dass Licht mit einem ersten Lichtspektrum oder einer ersten Wellenlänge durch die Linsenoberfläche des ersten Linsenbereiches verlaufen und Licht mit einem weiteren, unterschiedlichen Lichtspektrum oder einer unterschiedlichen Wellenlänge durch die Linsenoberfläche eines weiteren, anderen Linsenbereiches verlaufen.

2. Vorrichtung nach Anspruch 1, **dadurch gekennzeichnet, dass** der Linsenbereich mit einem asphärischen Oberflächenverlauf aus zwei aneinander angrenzenden Linsenbereichen (B, C) gebildet wird, wobei ein Linsenbereich (C) hiervon einen konvexen Oberflächenverlauf und der mindestens eine weitere Linsenbereich (B) einen planen Oberflächenverlauf aufweist.

3. Vorrichtung nach Anspruch 2, **dadurch gekennzeichnet, dass** die asphärische Linse (2) im Querschnitt in die mindestens drei horizontalen Abschnitte unterteilt ist, von denen

   - ein oberster Abschnitt durch die Höhe a bestimmt ist, welche die vertikale Höhe der konvex verlaufenden Linsenoberfläche angibt,
   - ein nachfolgender, tieferer Abschnitt durch die Höhe b bestimmt ist, welche die vertikale Höhe der nicht konvex verlaufenden, planen Linsenoberfläche angibt,
   - ein nachfolgender, tieferer Abschnitt durch die Höhe c bestimmt ist, welche die vertikale Höhe der konkav verlaufenden Linsenoberfläche angibt,

   wobei die Summe der Höhen a, b und c die Gesamthöhe (H) der Linse (2) ergibt.

4. Vorrichtung nach Anspruch 3, **dadurch gekennzeichnet, dass** ein als zylindrische Scheibe oder Platte ausgebildeter unterster Linsenbereich (D) vorgesehen ist, mit einer vertikalen Höhe d, zur Rotationsachse (LA) der Linse (2) parallelen ringartigen Seitenflächen (D2), und wobei die Summe der Höhen a, b, c und d die Gesamthöhe (H) der Linse (2) ergibt.

5. Vorrichtung nach einem der vorherigen Ansprüche, **dadurch gekennzeichnet, dass** die Bereiche der LED-Beleuchtungsvorrichtung derart angeordnet und mit dem Verschlusssystem des Behälters (6), insbesondere dem Verschluss (7), zusammenwirken können, dass Licht(-strahlen) mit einem ersten Lichtspektrum oder einer ersten Wellenlänge auf eine erste Oberfläche des Verschlusssystems oder des Verschlusses (7) treffen und Licht(-strahlen) mit einem weiteren, unterschiedlichen Lichtspektrum oder einer unterschiedlichen Wellenlänge auf eine weitere, andere Oberfläche oder Oberflächenbereich des Verschlusssystems oder des Verschlusses (7) treffen.

6. Vorrichtung nach einem der vorherigen Ansprüche, **dadurch gekennzeichnet, dass** der größte äußere Durchmesser der asphärischen Linse größer mindestens das 2,5 fache des Durchmessers der Verschlüsse beträgt.

**Claims**

1. Inspection device (1) for inspecting closures (7) of bottles (6) or similar containers, in particular screw closures, comprising

   an optical lens (2), a lighting device (3), a camera (5), and a system (13) for electronic image processing, wherein

   - the lens (2) is mounted vertically above the closure (7), and
   - the bundling of rays occurs in the direction of the camera (5) mounted vertically above the optical lens (2), and
   - the camera (5) is connected to the system (13) for electronic image processing, wherein the optical lens (2) is designed as a rotationally symmetric lens and comprises at least two lens regions (A, B, C), of which one lens region A exhibits a convex surface and the at least one further lens region (B, C) exhibits a flat aspherical surface, wherein

   the lighting device (3) is a ring-type LED lighting device or consists of a plurality of fields, **characterised in that** the LED lighting device comprises at least two or more regions, wherein each of the regions or several regions in common can emit light spectra of different wavelengths and/or wavelengths differing from one another, and that the regions of the LED lighting device are arranged in such a way, and interact with the arrangement of the lenses (2) and their lens regions (A, B, C) in such a way, that light with a first light spectrum or a first wavelength runs through the lens surface of the first lens region and light with a further different light spectrum or a different wavelength runs through a further different lens region.

2. Device according to claim 1, **characterised in that** the lens region with an aspherical surface course is formed from two adjacent lens regions (B, C), wherein one lens region (C) of these exhibits a convex surface course and the at least one further lens region (B) exhibits a flat surface course.

3. Device according to claim 2, **characterised in that** the aspherical lens (2) is subdivided in cross-section into at least three horizontal sections, of which

   - a topmost section is determined by the height a, which indicates the vertical height of the convex lens surface,
   - a following lower section is determined by the height b, which indicates the vertical height of the non-convex flat lens surface,
   - a following lower section is determined by the height c, which indicates the vertical height of the concave lens surface,

   wherein the sum of the heights a, b, and c gives the total height (H) of the lens (2).

4. Device according to claim 3, **characterised in that** a lowermost lens region (D) is provided, configured as a cylindrical disk or plate, with a vertical height d, ring-shaped side surfaces (D2) parallel to the axis of rotation (LA) of the lens (2), and wherein the sum of the heights a, b, c and d gives the total height (H) of the lens (2).

5. Device according to any one of the preceding claims, **characterised in that** the regions of the LED lighting device are arranged in such a way, and can interact with the closure system of the container (6), in particular with the closure (7), in such a way that light (beams) with a first light spectrum or a first wavelength impinge onto a first surface of the closure system or of the closure (7), and light (beams) with a further different light spectrum or a different wavelength impinge on a further different surface or surface region of the closure system or of the closure (7).

6. Device according to any one of the preceding claims, **characterised in that** the greatest outer diameter of the aspherical lens is greater by at least 2.5 times than the diameter of the closures.

**Revendications**

1. Dispositif d'inspection (1) pour l'inspection de fermetures (7) de bouteilles (6) ou contenants similaires, en particulier de fermetures à vis, comprenant

   une lentille optique (2), un dispositif d'éclairage (3), une caméra (5) et un système de traitement d'images électronique (13), dans lequel

   - la lentille (2) est montée verticalement au-dessus de la fermeture (7) et

7

- la concentration des rayons se fait en direction de la caméra (5) montée verticalement au-dessus de la lentille optique (2) et
- la caméra (5) est raccordée au système de traitement d'images électronique (13), dans lequel

la lentille optique (2) est réalisée en tant que lentille à symétrie de rotation et présente au moins deux zones de lentille (A, B, C), dont une zone de lentille A présente une surface convexe et l'au moins une autre zone de lentille (B, C) présente une surface asphérique plane, dans lequel
le dispositif d'éclairage (3) est un dispositif d'éclairage LED annulaire ou composé de plusieurs champs, **caractérisé en ce que**
le dispositif d'éclairage LED présente au moins deux ou plusieurs zones, dans lequel chacune des zones ou plusieurs zones peuvent émettre ensemble, des spectres de lumière de différentes longueurs d'ondes et/ou différentes les unes des autres, et que
les zones du dispositif d'éclairage LED sont agencées et coopèrent avec l'agencement de la lentille (2) et de ses zones de lentille (A, B, C) de telle sorte que la lumière avec un premier spectre de lumière ou une première longueur d'onde s'étend à travers la surface de lentille de la première zone de lentille et la lumière avec un autre spectre de lumière différent ou une longueur d'onde différente s'étend à travers la surface de lentille d'une autre zone de lentille supplémentaire.

2. Dispositif selon la revendication 1, **caractérisé en ce que** la zone de lentille avec un tracé de surface asphérique est formée de deux zones de lentille adjacentes l'une à l'autre (B, C), dans lequel une zone de lentille (C) présente un tracé de surface convexe et l'au moins une autre zone de lentille (B) présente un tracé de surface plan.

3. Dispositif selon la revendication 2, **caractérisé en ce que** la lentille asphérique (2) est divisée en coupe transversale dans les au moins trois sections horizontales dont

- une section supérieure est déterminée par la hauteur a, qui indique la hauteur verticale de la surface de lentille s'étendant de manière convexe,
- une section suivante plus basse est déterminée par la hauteur b, qui indique la hauteur verticale de la surface de lentille plane s'étendant de manière non convexe,
- une section suivante plus basse est déterminée par la hauteur c, qui indique la hauteur verticale de la surface de lentille s'étendant de manière concave,

dans lequel la somme des hauteurs a, b et c donne la hauteur totale (H) de la lentille (2).

4. Dispositif selon la revendication 3, **caractérisé en ce qu'**une zone de lentille (D) inférieure réalisée en tant que plaque ou disque cylindrique est prévue, avec une hauteur verticale d, des surfaces latérales (D2) annulaires parallèles à l'axe de rotation (LA) de la lentille (2), et dans lequel la somme des hauteurs a, b, c et d donne la hauteur totale (H) de la lentille (2).

5. Dispositif selon l'une quelconque des revendications précédentes, **caractérisé en ce que** les zones du dispositif d'éclairage LED sont agencées et peuvent coopérer avec le système de fermeture du récipient (6), en particulier la fermeture (7), de telle sorte que (des rayons de) lumière avec un premier spectre de lumière ou une première longueur d'onde sont incidents sur une première surface du système de fermeture ou de la fermeture (7) et (des rayons de) lumière avec un autre spectre de lumière différent ou une longueur d'onde différente sont incidents sur une autre surface supplémentaire ou zone de surface du système de fermeture ou de la fermeture (7).

6. Dispositif selon l'une quelconque des revendications précédentes, **caractérisé en ce que** le plus grand diamètre extérieur de la lentille asphérique est au moins 2,5 fois plus grand que le diamètre des fermetures.

Fig. 1

**Fig. 2**

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6122048 A
- US 20040150815 A1
- EP 1270433 A2